Europäisches Patentamt

European Patent Office

Office européen des brevets

(11) Veröffentlichungsnummer: **0 024 740**
**B1**

(12) **EUROPÄISCHE PATENTSCHRIFT**

(45) Veröffentlichungstag der Patentschrift:
18.07.84

(21) Anmeldenummer: 80105203.6

(22) Anmeldetag: 02.09.80

(51) Int. Cl.³: **B 32 B 27/08**

(54) Mehrschichten-Kunststoff-Folien und Verfahren zu ihrer Herstellung.

(30) Priorität: 04.09.79 DE 2935631

(43) Veröffentlichungstag der Anmeldung:
11.03.81 Patentblatt 81/10

(45) Bekanntmachung des Hinweises auf die Patenterteilung:
18.07.84 Patentblatt 84/29

(84) Benannte Vertragsstaaten:
AT BE CH DE FR GB IT LI LU NL SE

(56) Entgegenhaltungen:
DE - A - 1 103 885
DE - A - 1 930 585
DE - A - 1 964 059
DE - A - 2 105 833
DE - A - 2 402 120
US - A - 3 762 986
US - A - 4 008 347

Saechtling "Kunststoff-Taschenbuch", 20. Ausgabe,
1977, Tafel 52, Carl Hauser Verlag

Die Akte enthält technische Angaben, die nach dem
Eingang der Anmeldung eingereicht wurden und die
nicht in dieser Patentschrift enthalten sind.

(73) Patentinhaber: **Plate Bonn Gesellschaft mit
beschränkter Haftung, Siemensstrasse 21, D-5300 Bonn
(DE)**

(72) Erfinder: **Raabe, Fritz, Dr., Im Krausfeld 30, D-5300 Bonn
(DE)**
Erfinder: **Schruhl, Robert, Siemensstrasse 23 A,
D-5300 Bonn (DE)**

(74) Vertreter: **Türk, Dietmar, Dr. rer. nat. et al, Redies,
Redies, Türk & Gille Patentanwälte Brucknerstrasse 20,
D-4000 Düsseldorf 13 (DE)**

## Beschreibung

Die Erfindung betrifft eine Mehrschichten-Kunststoff-Folie, die zum Behäuten von insbesondere Schaumkunststoff geeignet ist, mit einer höher schmelzenden Folie und einer niedriger schmelzenden Folie, wobei der Erweichungspunkt der höher schmelzenden Folie höher ist als der Erweichungspunkt der niedriger schmelzenden Folie, sowie ein Verfahren zu ihrer Herstellung.

Kunststoff-Folien sind bereits in zahlreichen Modifikationen bekannt. Ein spezielles Anwendungsgebiet für Kunststoff-Folien ist deren Verwendung zum Behäutern von Gegenständen aus Schaumkunststoffen, wie z. B. Platten oder Folien, Raumkörpern, wie rohrförmigen Isolierungen für Heizungsrohre und dgl., um so diesen Gegenständen eine glatte Oberfläche zu verleihen. Eine derartige glatte Oberfläche ist häufig erwünscht, weil diese leichter gereinigt werden kann als eine mit großen Poren versehene Schaumkunststoffoberfläche. Außerdem wird durch die Behäutung erreicht, daß kein Wasser in den Schaumstoff eindringen kann, so daß der Schaumstoff weitgehend vor Verrottung geschützt ist. Ferner können derartige Folien leicht bedruckt oder lackiert werden, was bei Schaumkunststoffoberflächen nur schwer oder überhaupt nicht möglich ist.

Die Kunststoff-Folien, mit denen Schaumkunststoffgegenstände behäutet werden, müssen hohen mechanischen Anforderungen, insbesondere hinsichtlich ihrer Flexibilität, genügen. Sie müssen sich außerdem fest mit der Oberfläche der damit behäuteten Schaumkunststoffkörper verbinden, dürfen keine Blasen bilden und die Verbindung muß dauerhaft beibehalten werden. Zum Behäuten der Schaumkunststoffkörper dürfen keine großen mechanischen Kräfte erforderlich sein, weil sonst die Schaumkunststoffkörper beim Verpressen der zum Behäuten verwendeten Kunststoff-Folien stark zusammengepreßt werden müßten. Dies kann dazu führen, daß die solchermaßen behäuteten Schaumkunststoffkörper ihre ursprüngliche Form nicht wieder vollständig zurückgewinnen.

Die Verwendung von Lösungsklebern zum Behäuten hat andererseits den Nachteil, daß der Lösungskleber in den Schaumkunststoff eindringt und daß das darin enthaltene Lösungsmittel nur schwer zu verflüchtigen ist.

Die Verwendung von Haftklebern zum Behäuten hat den Nachteil, daß nach der Behäutung die behäuteten Schaumkunststoffkörper gegen bleibende Verformungen empfindlich sind. Außerdem müssen die verwendeten Haftkleberfolien auf der Kleberseite mit einer Silicon-beschichteten Schutzfolie abgedeckt sein, die teuer ist.

Aus der US-A-3 762 986 ist eine Mehrschichten-Kunststoff-Folie für Verpackungszwecke bekannt, die eine höher schmelzende Polyamidfolie mit einem Schmelzpunkt über 200° C, vorzugsweise zwischen 210 und 300° C, und eine niedriger schmelzende Polyamidfolie mit einem Schmelzpunkt unter 200° C, vorzugsweise zwischen 150 und 195° C, aufweist.

Aus der DE-A-1 964 059 ist eine Mehrschichten-Kunststoff-Folie bekannt, die aus einer höher schmelzenden und einer niedriger schmelzenden Folie besteht, wobei der Erweichungspunkt der höher schmelzenden Folie höher ist als der Erweichungspunkt der niedriger schmelzenden Folie, und die zum Überziehen eines bahnförmigen Substrats verwendet wird.

Der vorliegenden Erfindung liegt nun die Aufgabenstellung zugrunde, eine zum Behäuten von insbesondere Schaumkunststoffen geeignete Mehrschichten-Kunststoff-Folie zu schaffen, die ohne Schutzfolie auf der Kleberseite gelagert werden kann, kein Lösungsmittel enthält und unter Anwendung eines äußerst geringen Druckes mit den zu behäutenden Gegenständen verbunden werden kann unter Ausbildung einer dauerhaften, praktisch nicht lösbaren Verbindung mit den behäuteten Gegenständen.

Es wurde nun überraschend gefunden, daß diese Aufgabenstellung mit der nachstehend definierten Mehrschichten-Kunststoff-Folie der Erfindung gelöst werden kann.

Gegenstand der Erfindung ist eine Mehrschichten-Kunststoff-Folie mit einer höher schmelzenden Folie und einer niedriger schmelzenden Folie, wobei der Erweichungspunkt der höher schmelzenden Folie höher ist als der Erweichungspunkt der niedriger schmelzenden Folie, die dadurch gekennzeichnet ist, daß
die höher schmelzende Folie 10 bis 50 µm dick ist und einen Erweichungspunkt von 140 bis 250° C aufweist,
die niedriger schmelzende Folie 10 bis 50 µm dick ist und einen Erweichungspunkt von 70 bis 130° C und einen Schmelzbeginn bi 100 bis 190° C aufweist, wobei zwischen Erweichungspunkt und Schmelzbeginn eine Temperaturdifferenz von 10 bis 60° C liegt, und
die Folien unter Einwirkung von Wärme und Druck miteinander verbunden oder koextrudiert sind.

Der wesentliche Erfindungsgedanke besteht darin, daß die Mehrschichten-Kunststoff-Folie der Erfindung auf einer Seite eine Folie mit einem verhältnismäßig hohen Erweichungspunkt und auf der anderen Seite eine Folie mit einem verhältnismäßig niedrigen Erweichungspunkt aufweist. Vorzugsweise beträgt die Dicke einer oder beider Folien mindestens etwa 20 µm und höchstens etwa 40 µm, besonders bevorzugt etwa 30 µm.

Vorzugsweise hat die höher schmelzende Folie einen Erweichungspunkt von mindestens etwa 160° C und von höchstens etwa 220° C, besonders bevorzugt von etwa 200° C.

Die niedriger schmelzende Folie hat vorzugsweise einen Erweichungspunkt von mindestens etwa 80° C und von höchstens etwa 120° C und einen Schmelzbeginn von mindestens etwa 120°C und von höchstens etwa 160°C.

Hinsichtlich der Temperaturdifferenz zwischen Erweichungspunkt und Schmelzbeginn gilt, daß diese bei Copolyamiden vorzugsweise bei 10°C bis 30°C und bei Polyestern und Polyurethanen mindestens etwa 30°C und höchstens etwa 50°C beträgt.

Die Mehrschichten-Kunststoff-Folie der Erfindung hat zweckmäßig eine Breite von mehr als 80 cm, bevorzugt von mindestens 100 cm. Es ist außerordentlich schwierig, Mehrschichten-Kunststoff-Folien mit einer derartigen Breite herzustellen. Überraschenderweise ist dies erfindungsgemäß jedoch möglich. Die Länge der Folie beträgt mindestens 1 m. In der Regel werden die Folien jedoch in großen Längen von mehreren hundert Metern hergestellt, die zu Rollen aufgerollt werden.

Die erfindungsgemäße Mehrschichten-Kunststoff-Folie kann nach einem einen weiteren Gegenstand der Erfindung bildenden Verfahren hergestellt werden, das dadurch gekennzeichnet ist, daß eine 10 bis 50 μm dicke Folie mit einem Erweichungspunkt von 140 bis 250°C und eine 10 bis 50 μm dicke Folie mit einem Erweichungspunkt von 70 bis 130°C und einem Schmelzbeginn von 100 bis 190°C, wobei zwischen Erweichungspunkt und Schmelzbeginn eine Temperaturdifferenz von 10 bis 60°C liegt, unter Einwirkung von Wärme und Druck miteinander verbunden oder koextrudiert werden.

Die erfindungsgemäße Mehrschichten-Kunststoff-Folie eignet sich für die Verwendung zum Behäuten insbesondere von Schaumkunststoffen.

Erweichungspunkt und Schmelzbeginn sowie das hier nicht besonders interessierende Schmelzende werden wie folgt bestimmt:

Auf eine Kofler-Heizbank werden Stücke des zu untersuchenden Kunststoffs mit einer Grundfläche von etwa 1 mm² und einer Dicke von etwa 1 mm gelegt. Nachdem diese Stücke 1 Minute auf der Kofler-Heizbank gelegen haben, wird mit einem Spatel festgestellt, bei welcher Temperatur sich die Kunststoff-Teststücke ohne Einwirkung einer großen Kraft plastisch verformen lassen. Die auf diese Weise ermittelte niedrigste Temperatur ist der Erweichungspunkt. Die niedrigste Temperatur, bei der sich beim Abheben des Spatels von den Kunststoff-Teststücken Fäden zwischen den erweichten Teststücken und dem Spatel ziehen lassen, ist der Schmelzbeginn. Das Schmelzende ist die niedrigste Temperatur, bei der die Teststücke konturenlos zerlaufen. Naturgemäß ist bei diesen Messungen eine gewisse Fehlergrenze zu berücksichtigen. Sie liegt aber erfahrungsgemäß im Bereich von nur etwa ± bis 4°C.

Die Mehrschichten-Kunststoff-Folie der Erfindung kann aus beliebigen Kunststoffen bestehen, die bei erhöhter Temperatur Klebeeigenschaften besitzen. Typische Beispiele hierfür sind Polyurethane, Copolyamide und Copolyester. Folien dieser Zusammensetzung haben als Heißschmelzkleber technische Bedeutung erlangt. Als Heißschmelzkleber geeignete derartige Kunststoffe sind in zahlreichen Patentschriften und sonstigen Literaturstellen beschrieben (vgl. z. B. DE-C-1 253 449, DE-A-2 324 159, 2 324 160 und 2 823 762).

Polyurethanfolien haben den Vorteil, daß sie besonders elastisch sind. Die Auswahl des Kunststoffes hängt vom gewünschten Verwendungszweck ab. Sie kann auch danach erfolgen, welcher chemischen Zusammensetzung die Gegenstände, insbesondere Schaumkunststoffe sind, die mit den Mehrschicht-Kunststoff-Folien gemäß der Erfindung behäutet werden sollen. Die Auswahl ist so zu treffen, daß gute Verträglichkeit zwischen Mehrschicht-Kunststoff-Folie und zu behäutendem Schaumkunststoff besteht, d. h. daß durch Einwirkung von Wärme und Druck sich die Mehrschicht-Kunststoff-Folie gemäß der Erfindung gut und einwandfrei auf den Schaumkunststoff kleben läßt. Besonders gute Ergebnisse werden erzielt, wenn Mehrschicht-Kunststoff-Folien aus Polyurethan auf Schaumkunststoffe aus Polyurethan geklebt werden. Polyurethan-Schaumkunststoffe haben eine besonders große technische Bedeutung und werden in größtem Umfang eingesetzt. Auf derartige Schaumkunststoffe lassen sich aber auch Mehrschicht-Kunststoff-Folien gemäß der Erfindung auf Basis von Copolyamiden oder Copolyestern gut verkleben.

Die Mehrschicht-Kunststoff-Folie ist zweckmäßig ein- oder beidseitig mit einer abziehbaren Schutzfolie versehen. Dies gilt besonders für Folien auf Basis Polyurethan und/oder Copolyamid. Als Schutzfolien hierfür eignen sich besonders Polyäthylenfolien, da sie nicht fest an den Polyurethan- oder Copolyamidfolien haften und leicht abgezogen werden können. Derartige Schutzfolien sind einfach herzustellen, da sie keine zusätzliche Beschichtung mit einem Trennmittel, z. B. Silikon, aufweisen müssen. Die einzelnen Kunststoff-Folien, die zu einer Mehrschicht-Kunststoff-Folie gemäß der Erfindung verbunden werden sollen, können jeweils zweckmäßig in an sich bekannter Weise durch Co-Extrusion mit einer Schutzfolie in Form von Schläuchen hergestellt werden, die dann aufgeschnitten werden. Eine derartige einseitig mit einer Schutzfolie versehene Folie wird dann mit einer anderen ebenfalls mit einer Schutzfolie versehenen Folie und/oder mit nicht mit Schutzfolien versehenen Folie derart verbunden, daß die nicht mit Schutzfolien versehenen Seiten verkleben und Schutzfolien eine oder beide äußere Seiten der Mehrschicht-Kunststoff-Folie schützen. Als Schutzfolien können auch andere Kunststoff-Folien eingesetzt werden, z. B. Polypropylen.

Die Mehrschicht-Kunststoff-Folie gemäß der Erfindung kann auch aus mehr als zwei Kunststoff-Folien (eventuelle Schutzfolien nicht eingerechnet) bestehen. Beispielsweise können zwischen der niedrig schmelzenden Folie und der höher schmelzenden Folie ein oder mehrere Folien angeordnet sein, deren Erweichungspunkt bzw. Schmelzbeginn zwischen denjenigen der beiden äußeren Folien liegt. Es ist aber auch möglich, daß die mittlere Folie einen höheren Erweichungspunkt und Schmelzbeginn als die beiden äußeren Folien aufweist. Eine derartige Mehrschichtfolie besitzt dann also eine oder mehrere mittlere Folien mit einer besonders hohen thermischen Stabilität. Dies kann dann von Vorteil sein, wenn nach dem Behäuten eines Gegenstandes mit der Mehrschicht-Kunststoff-Folie gemäß der Erfindung die dann außen liegende verhältnismäßig hoch schmelzende Seite der Folie kurzfristig erweicht werden soll, ohne daß die Verbindung zu dem beschichteten Körper beeinträchtigt wird.

Die Herstellung derartiger aus mindestens drei Folien bestehenden Mehrschicht-Kunststoff-Folien kann derart erfolgen, daß alle zu verbindenden Folien gleichzeitig miteinander verbunden werden, wie nachfolgend noch erläutert wird. Es ist aber auch möglich, zwei Folien miteinander zu verbinden und dann diese Duplo-Kunststoff-Folie mit einer oder mehreren weiteren Folien gleichzeitig oder nacheinander zu vereinigen. In jedem Fall können die jeweils äußeren Seiten mit Schutzfolien belegt sein, wie oben beschrieben wurde. Vor dem Vereinigen mit weiteren Folien muß naturgemäß eine eventuell vorhandene äußere Schutzfolie abgezogen werden.

Die Mehrschicht-Kunststoff-Folie kann bedruckt und/oder lackiert sein, wie dies bei einfachen Folien bekannt ist. Die Folie gemäß der Erfindung kann auch eine profilierte Oberfläche aufweisen, z. B. genarbt sein. Die Profilierung erfolgt zweckmäßig nach Herstellung der Mehrschicht-Kunststoff-Folie.

Zum Verbinden der beiden Folien unter Einwirkung von Druck und Temperatur können die üblichen Vorrichtungen eingesetzt werden. Zweckmäßig werden sogenannte Thermokalander eingesetzt, die aus beheizten Walzen bestehen, zwischen denen die zu vereinigenden Folien durchlaufen. Die Temperatur der Walzen ist so einzustellen, daß die Folien verkleben, im übrigen aber nicht überhitzt und dadurch beschädigt werden.

Mehrere Folien können auch gleichzeitig coextrudiert werden, wobei sogenannte Mehrschicht-Extrusions-Köpfe, z. B. Dreischichtköpfe, Vierschichtköpfe, usw. eingesetzt werden. Es werden dann gleichzeitig z. B. bei Verwendung eines Dreischichtkopfes drei Schlauchfolien in konzentrischer Anordnung extrudiert, die unmittelbar nach dem Austritt aus dem Dreischichtkopf miteinander verbunden sind. Es können mit derartigen Mehrschichtköpfen zwei oder mehrere zu verklebende Folien und ein oder zwei Schutzfolien als jeweils innere oder äußere Folien coextrudiert werden. Allerdings ist die Extrusion von mehr als zwei konzentrischen Schlauchfolien, insbesondere von mehr als drei konzentrischen Schlauchfolien, relativ schwierig, so daß in derartigen Fällen bevorzugt wird, die weiteren Folien, die gegebenenfalls miteinander vereinigt werden sollen, nach der Extrusion miteinander zu vereinigen.

Es ist außerordentlich überraschend, daß das Vereinigen der Folien gemäß der Erfindung in einwandfreier Weise durchführbar ist, wobei keine Blasenbildung zwischen den beiden Folien eintritt, obwohl die verwendeten Folien extrem dünn sind und unterschiedliche physikalische Eigenschaften aufweisen, die oben definiert wurden.

Die Mehrschicht-Kunststoff-Folie gemäß der Erfindung kann mit der niedrig schmelzenden Seite auf zu behäutende Gegenstände aufgeklebt werden. Das Verkleben kann dadurch erfolgen, daß die Mehrschicht-Kunststoff-Folie auf oder wenig über den Erweichungspunkt der niedrig schmelzenden Folie erhitzt und auf den zu behäutenden Gegenstand aufgebracht wird. Die niedrig schmelzende Folie wirkt also als Schmelzkleber. Wie bereits oben dargelegt, ist es besonders vorteilhaft, die Mehrschicht-Kunststoff-Folie gemäß der Erfindung zum Behäuten von Schaumkunststoffkörpern einzusetzen. Es tritt eine außerordentlich feste Verbindung zum Schaumkunststoffkörper ein. Die Außenseite der Folie behält ihre vorzügliche geschlossene, gegebenenfalls profilierte, bedruckte und/oder lackierte Oberfläche. Es wird hier auf eine überraschend einfache Weise ein Verbundkörper aus einem Schaumkunststoff und einer keine Poren aufweisenden Oberfläche (Haut) erhalten, der für vielfältige Verwendungszwecke einsetzbar ist. Als Beispiele hierfür seien die anfangs genannten Isolierungen für Rohre, z. B. Heizungsrohre oder Heißwasserrohre, sowie Schaumkunststoffplatten oder -matten im Kraftfahrzeugbau, Flugzeugbau, usw. erwähnt.

Die Mehrschicht-Kunststoff-Folie gemäß der Erfindung kann aber auch vorteilhaft zum Behäuten von anderen Gegenständen eingesetzt werden, insbesondere von Textilvliesen oder Textilgeweben, Zellulosebahnen, Gegenständen einschließlich Folien und Platten aus anderen Kunststoffen, insbesondere Polyvinylchlorid.

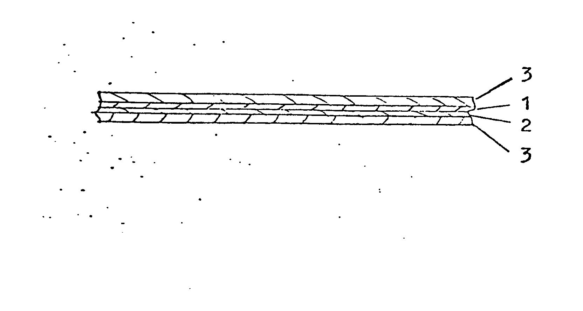

Die Erfindung wird anhand der Zeichnung erläutert. Die Zeichnung stellt einen stark vergrößerten Querschnitt durch eine Mehrschicht-Kunststoff-Folie gemäß der Erfindung dar. Mit 1 ist die höher schmelzende und mit 2 die niedrig schmelzende Kunststoff-Folie bezeichnet. In der Zeichnung sind beide Seiten dieser Mehrschicht-Kunststoff-Folie mit Schutzfolien 3 versehen.

### Beispiel 1

Eine 30 μm starke Polyurethanfolie aus einem OH-haltigen Polyester, Butandiol und Diphenylmethandiisocyanat (Polyurethan ESTANE 5713, eingetragenes Warenzeichen), die eine Polyäthylen-Schutzfolie einseitig aufweist, mit einem Erweichungspunkt von 100°C und einem Schmelzbeginn von 150°C wird auf einem Kalander mit der eine Schutzfolie nicht aufweisenden Seite auf eine 30 μm starke Polyurethanfolie aus einem OH-haltigen Polyester, Butandiol und Diphenylmethandiisocyanat (Polyurethan ELA STOLLAN C 85 A 10, eingetragenes Warenzeichen) mit einem Erweichungspunkt von 170"C und einem Schmelzbeginn von 200°C kaschiert. Die Temperatur der Heizwalze des Kalanders beträgt 130°C. Die Laufgeschwindigkeit beträgt 10 m pro Minute. Eine Verweilzeit von 1 Sekunde auf der Heizwalze reicht aus, um die beiden Polyurethanfolien fest miteinander zu verbinden.

Die niedriger schmelzende Polyurethanfolie weist ebenfalls einseitig eine Polyäthylen-Schutzfolie auf.

Die höher schmelzende Folie kann nach Abziehen der Schutzfolie auf einer normalen Bedruckungsanlage, zweckmäßig kontinuierlich, ganzflächig bedruckt werden, wobei ein Lack verwendet wird, der als Bindemittel ein Polyurethan, als Pigment Titandioxid und als Lösungsmittel Dimethylformamid, Cyclohexanon und Diacetonalkohol enthält.

## Beispiel 2

Es wird grundsätzlich wie im Beispiel 1 beschrieben gearbeitet. Die höher schmelzende Folie ist eine Polyamid 6-Folie, 40 μm stark, Erweichungspunkt etwa 200°C.

Die niedriger schmelzende Folie ist eine Polyurethanfolie, 30 μm stark, Erweichungspunkt 100°C, Schmelzbeginn 150°C, wie sie im Beispiel 1 verwendet wurde. Die Laufgeschwindigkeit des Kalanders beträgt 8 m pro Minute, und die Heizwalzentemperatur 140°C.

## Beispiel 3

Es wird wie im Beispiel 1 gearbeitet, wobei als höher schmelzende Folie eine 40 μm starke Polyurethanfolie mit einem Erweichungspunkt von 150°C verwendet wird. Die niedrig schmelzende Folie ist eine Polyamidfolie aus einem Copolyamid aus 40 Gewichtsteilen Caprolactam, 40 Gewichtsteilen Laurinlactam und 20 Gewichtsteilen AH-Salz (Salz aus Adipinsäure und Hexamethylendiamin). Die Polyamidfolie ist das Handelsprodukt PLATAMID H 105 (eingetragenes Warenzeichen). Die Stärke beträgt 30 μm, der Erweichungspunkt liegt bei 107°C und der Schmelzbeginn bei 118°C. Die Laufgeschwindigkeit des Kalanders beträgt 10 m pro Minute und die Temperatur der Heizwalze liegt bei 135°C.

## Beispiel 4

Eine Polyesterfolie auf Basis Terephthalsäure, Isophthalsäure, dimeren Fettsäuren und Butandiol mit einem Erweichungspunkt von 105°C und einem Schmelzbeginn von 135°C und einer Stärke von 30 μm wird in einer Bügelpresse 15 Sekunden lang bei 140"C Bügeltemperatur mit einer Polyurethanfolie verklebt, die einen Erweichungspunkt von 150"C aufweist und 40 μm stark ist.

## Beispiel 5

Eine Mehrschicht-Kunststoff-Folie, hergestellt nach Beispiel 1, die auf der höher schmelzenden Seite noch die Polyäthylenschutzfolie aufweist, wird mit der niedrig schmelzenden Seite auf eine Platte aus Schaumkunststoff auf Basis Polyurethan (Handelsprodukt Moltopren, eingetragenes Warenzeichen) aufgelegt und in einer Bügelpresse 10 Sekunden lang bei 130°C Bügeltemperatur aufgepreßt. Es tritt eine feste Verbindung zwischen der Schaumkunststoffoberfläche und der Mehrschicht-Kunststoff-Folie ein, die eine außerordentlich stabile Außenschicht aufweist. Die Schutzfolie kann zu beliebiger Zeit von der Außenfolie abgezogen werden.

## Patentansprüche

1. Mehrschichten-Kunststoff-Folie, die zum Behäuten von insbesondere Schaumkunststoff geeignet ist, mit einer höher schmelzenden Folie und einer niedriger schmelzenden Folie, wobei der Erweichungspunkt der höher schmelzenden Folie höher ist als der Erweichungspunkt der niedriger schmelzenden Folie, dadurch gekennzeichnet, daß
die höher schmelzende Folie 10 bis 50 μm dick ist und einen Erweichungspunkt von 140 bis 250°C hat,
die niedriger schmelzende Folie 10 bis 50 μm dick ist und einen Erweichungspunkt von 70 bis 130°C sowie einen Schmelzbeginn von 100 bis 190°C hat, wobei zwischen Erweichungspunkt und Schmelzbeginn eine Temperaturdifferenz von 10 bis 60°C liegt, und
die Folien unter Einwirkung von Wärme und Druck miteinander verbunden oder koextrudiert sind.

2. Mehrschichten-Kunststoff-Folie nach Anspruch 1, dadurch gekennzeichnet, daß die höher schmelzende Folie und/oder die niedriger schmelzende Folie jeweils eine Dicke von mindestens etwa 20 μm und höchstens etwa 40 μm, vorzugsweise jeweils von etwa 30 μm, aufweisen.

3. Mehrschichten-Kunststoff-Folie nach Anspruch 1 oder 2, dadurch gekennzeichnet, daß die höher schmelzende Folie einen Erweichungspunkt von mindestens etwa 160°C und von höchstens etwa 220°C, vorzugsweise von etwa 200°C, aufweist.

4. Mehrschichten-Kunststoff-Folie nach einem oder mehreren der Ansprüche 1 bis 3, dadurch gekennzeichnet, daß die niedriger schmelzende Folie einen Erweichungspunkt von mindestens etwa 80°C und von höchstens etwa 120°C und einen Schmelzbeginn von mindestens etwa 120°C und von höchstens etwa 160°C aufweist.

5. Mehrschichten-Kunststoff-Folie nach einem oder mehreren der Ansprüche 1 bis 4, dadurch gekennzeichnet, daß die niedriger schmelzende Folie einen Erweichungspunkt von mindestens etwa 90°C und von höchstens etwa 110°C und einen Schmelzbeginn von mindestens etwa 130°C und von höchstens etwa 150°C aufweist, wobei zwischen Erweichungspunkt und Schmelzbeginn eine Temperaturdifferenz von mindestens etwa 30°C und von höchstens etwa 50°C liegt.

6. Mehrschichten-Kunststoff-Folie nach einem oder mehreren der Ansprüche 1 bis 5, dadurch gekennzeichnet, daß sie mehr als 80 cm breit und mehr als 1 m lang ist.

7. Mehrschichten-Kunststoff-Folie nach einem oder mehreren der Ansprüche 1 bis 6, dadurch gekennzeichnet, daß eine oder beide Folien aus Polyurethan bestehen.

8. Mehrschichten-Kunststoff-Folie nach einem oder mehreren der Ansprüche 1 bis 7, dadurch gekennzeichnet, daß eine oder beide Folien aus Copolyamid bestehen.

9. Mehrschichten-Kunststoff-Folie nach einem oder mehreren der Ansprüche 1 bis 8, dadurch gekennzeichnet, daß eine oder beide Folien aus Polyester bestehen.

10. Mehrschichten-Kunststoff-Folie nach einem oder mehreren der Ansprüche 1 bis 9, dadurch gekennzeichnet, daß sie ein- oder beidseitig abziehbare Schutzfolien aufweist.

11. Mehrschichten-Kunststoff-Folie nach Anspruch 10, dadurch gekennzeichnet, daß eine oder beide Folien aus Polyurethan und/oder Copolyamid bestehen und Schutzfolien aus Polyethylen aufweisen.

12. Mehrschichten-Kunststoff-Folie nach einem oder mehreren der Ansprüche 1 bis 11, dadurch gekennzeichnet, daß sie profiliert, bedruckt und/oder lackiert ist.

13. Verfahren zur Herstellung der Mehrschichten-Kunststoff-Folie nach einem oder mehreren der Ansprüche 1 bis 12, dadurch gekennzeichnet, daß eine 10 bis 50 µm dicke Folie mit einem Erweichungspunkt von 140 bis 250°C und eine 10 bis 50 µm dicke Folie mit einem Erweichungspunkt von 70 bis 130°C und einem Schmelzbeginn von 100 bis 190°C, wobei zwischen Erweichungspunkt und Schmelzbeginn eine Temperaturdifferenz von 10 bis 60°C liegt, unter Einwirkung von Wärme und Druck miteinander verbunden oder koextrudiert werden.

## Claims

1. A multilayer plastics film which is suitable for covering in particular plastics foam, comprising a higher melting film and a lower melting film, the softening point of the higher melting film being higher than the softening point of the lower melting film, characterised in that the higher melting film is from 10 to 50 µm thick and has a softening point of from 140 to 250°C, the lower melting film is from 10 to 50 µm thick and has a softening point of from 70 5o 130°C and an initial melting temperature of from 100 to 190°C, there being a temperature difference of from 10 to 60°C between the softening point and the initial melting temperature, and th films are joined together or coextruded under the effect of heat and pressure.

2. A multilayer plastics film according to claim 1, characterised in that the higher melting film and/or the lower melting film each has a thickness of at least about 20 µm and at the most about 40 µm, preferably in each case about 30 µm.

3. A multilayer plastics film according to claim 1 or 2, characterised in that the higher melting film has a softening point of at least about 160°C and at the most about 220°C, preferably about 200°C.

4. A multilayer plastics film according to one or more of claims 1 to 3, characterised in that the lower melting film has a softening point of at least about 80°C and at the most about 120°C and has an initial melting temperature of at least about 120°C and at the most about 160°C.

5. A multilayer plastics film according to one or more of claims 1 to 4, characterised in that the lower melting film has a softening point of at least about 90°C and at the most about 110°C, and has an initial melting temperature of at least about 130°C and at the most about 150°C, there being a temperature difference of at least about 30°C and at the most about 50°C between the softening point and the initial melting temperature.

6. A multilayer plastics film according to one or more of claims 1 to 5, characterised in that it is more than 80 cm wide and more than 1 m long.

7. A multilayer plastics film according to one or more of claims 1 to 6, characterised in that one or both films consist of polyurethane.

8. A multilayer plastics film according to one or more of claims 1 to 7, characterised in that one or both films consist of copolyamide.

9. A multilayer plastics film according to one or more of claims 1 to 8, characterised in that one or both films consist of polyester.

10. A multilayer plastics film according to one or more of claims 1 to 9, characterised in that it has protective films which may be pulled off from one or both sides.

11. A multilayer plastics film according to claim 10, characterised in that one or both films consist of polyurethane and/or copolyamide and have protective films of polyethylene.

12. A multilayer plastics film according to one or more of claims 1 to 11, characterised in that it is profiled, printed and/or lacquered.

13. A process for the production of the multilayer plastics film according to one or more of claims 1 to 12, characterised in that a film which is from 10 5o 50 µm thick and has a softening point of from 140 to 250°C, and a film which is from 10 to 50 µm thick and has a softening point of from 70 to 130°C and an initial melting temperature of from 100 to 190°C are joined together or coextruded under the effect of heat and pressure, and there is a temperature difference of from 10 to 60°C between the softening point and the initial melting temperature.

## Revendications

1. Feuille multicouche en matière plastique, qui convient pour revêtir d'une peau notamment une matière plastique mousse, et comportant une feuille à point de fusion supérieur et une feuille à point de fusion inférieur, le point de ramollissement de la feuille à point de fusion supérieur étant supérieur au point de ramollissement de la feuille à point de fusion inférieur, caractérisé en ce que la feuille à point de fusion supérieur possède une épaisseur comprise entre 10 et 50 μm et un point de ramollissement compris entre 140 et 250°C, que la feuille à point de fusion inférieur possède une épaisseur comprise entre 10 et 50 μm et un point de ramollissement compris entre 70 et 130°C et un début de fusion se situant entre 100 et 190°C, avec une différence de température entre le point de ramollissement et le début de fusion comprise entre 10 et 60°C, et que les feuilles sont reliées entre elles ou coextrudées sous l'action de la chaleur et d'une pression.

2. Feuille multicouche en matière plastique selon la revendication 1, caractérisée en ce que la feuille à point de fusion supérieur et/ou la feuille à point de fusion inférieur possèdent respectivement une épaisseur égale au moins à environ 20 μm et égale tout au plus à 40 μm, et de préférence égale respectivement à environ 30 μm.

3. Feuille multicouche en matière plastique selon la revendication 1 ou 2, caractérisée en ce que la feuille à point de fusion supérieur possède un point de ramollissement égal au moins à environ 160°C et au plus à environ 220°C, et égal de préférence à environ 200°C.

4. Feuille multicouche en matière plastique selon l'une ou plusieurs des revendications 1 à 3, caractérisée en ce que la feuille à point de fusion inférieur possède un point de ramollissement égal à environ 80°C et au plus à environ 120°C et un début de fusion situé à au moins 120°C et au plus à environ 160°C.

5. Feuille multicouche en matière plastique selon l'une ou plusieurs des revendications 1 à 4, caractérisée en ce que la feuille à point de fusion inférieur possède un point de ramollissement situé à au moins 90°C et au plus à environ 110°C et un début de fusion situé à environ 130°C et au plus à environ 150°C, avec une différence de température entre le point de ramollissement et le début de fusion comprise entre au moins 80°C et au plus environ 50°C.

6. Feuille multicouche en matière plastique selon l'une ou plusieurs des revendications 1 à 5, caractérisée en ce qu'elle possède une largeur supérieure à 80 cm et une longueur supérieure à 1 m.

7. Feuille multicouche en matière plastique selon l'une ou plusieurs des revendications 1 à 6, caractérisée en ce qu'une ou les deux feuilles sont constituées par du polyuréthane.

8. Feuille multicouche en matière plastique selon l'une ou plusieurs des revendications 1 à 7, caractérisée en ce qu'une ou les deux feuilles sont constituées par un copolyamide.

9. Feuille multicouche en matière plastique selon l'une ou plusieurs des revendications 1 à 8, caractérisée en ce qu'une ou les deux feuilles sont constituées par un polyester.

10. Feuille multicouche en matière plastique selon une ou plusieurs des revendications 1 à 9, caractérisée en ce qu'elle possède sur une face ou sur ses deux faces, des feuilles protectrices détachables.

11. Feuille multicouche de matière plastique selon la revendication 10, caractérisée en ce qu'une ou les deux feuilles sont constituées par des polyuréthane et/ou un copolyamide et comportent des feuilles protectrices en polyéthylène.

12. Feuille multicouche en matière plastique selon une ou plusieurs des revendications 1 à 11, caractérisée en ce qu'elle est profilée, imprimée et/ou peinte.

13. Procédé pour fabriquer une feuille multicouche en matière plastique selon une ou plusieurs des revendications 1 à 12, caractérisée en ce qu'on relie entre elles et on coextrude, sous l'action d'une chaleur et d'une pression, une feuille d'une épaisseur comprise entre 10 et 50 μm et possédant un point de ramollissement compris entre 140 et 250°C et une feuille d'une épaisseur comprise entre 10 et 50 μm et possédant un point de ramollissement compris entre 70 et 130°C et un début de fusion se situant entre 100 et 190°C, la différence de température entre le point de ramollissement et le début de fusion étant comprise entre 10 et 60°C.